Europäisches Patentamt

European Patent Office

Office européen des brevets

(11) Publication number: **0 061 460**
**B1**

(12) **EUROPEAN PATENT SPECIFICATION**

(45) Date of publication of patent specification: **13.03.85**

(51) Int. Cl.⁴: **G 11 B 5/60**

(21) Application number: **81902341.7**

(22) Date of filing: **11.08.81**

(86) International application number:
**PCT/US81/01070**

(87) International publication number:
**WO 82/01272 15.04.82 Gazette 82/10**

(54) **MULTI-SPEED MAGNETIC RECORDER WITH WEAR RESISTANT PLAYBACK HEAD.**

(30) Priority: **03.10.80 US 193773**

(43) Date of publication of application:
**06.10.82 Bulletin 82/40**

(45) Publication of the grant of the patent:
**13.03.85 Bulletin 85/11**

(84) Designated Contracting States:
**DE FR GB NL**

(56) References cited:
**DE-A-2 115 268**
**DE-A-2 302 782**
**DE-B-1 111 855**
**US-A-3 525 987**
**US-A-3 582 917**
**US-A-3 614 579**
**US-A-3 732 552**
**US-A-4 086 635**
**US-A-4 146 911**

**IBM TECHNICAL DISCLOSURE BULLETIN,
vol.13, no. 5, October 1970, NEW YORK (US)
W.J. SCHAFFER et al :"Self Extending Air
Bearing", page 1334**

(73) Proprietor: **EASTMAN KODAK COMPANY**
**343 State Street**
**Rochester New York 14650 (US)**

(72) Inventor: **BROWDER, Lewis B.**
**1133 East Palm Street**
**Altadena, CA 91001 (US)**

(74) Representative: **Mestre, Jean et al**
**Kodak-Pathé Département des Brevets et
Licences 30, rue des Vignerons B.P. 60
F-94302 Vincennes Cedex (FR)**

(56) References cited:
**IEEE TRANSACTIONS ON MAGNETICS, vol.
MAG-9, no.4, December 1973 NEW YORK (US)
A. ESHEL et al : "Experimental and Theoretical
Investigation of Head to Tape Separation in
Magnetic Recordings", pages 683-688
JOURNAL OF THE SMPTE, vol.69, January
1960 SCARSDALE (US) S.W. SPAULDING:
"Television and Lunar Exploration", pages 39-43**

Courier Press, Leamington Spa, England.

## Description

This invention relates in general to magnetic recording and, in particular, to playback heads useful with magnetic recorders which record at one recording medium-to-head speed and play back at another.

There are many instances in the art of magnetic recording where a recording medium such as a magnetic tape is transported during recording at a first high speed and, during playback, at a second, much lower, speed. See, for example, "Television and Lunar Exploration", by S. W. Spaulding, Journal of the SMPTE, Vol. 69, January 1960, pg. 39.

As part of their design, playback heads ordinarily have transducer gaps which are extremely shallow. Attendantly, it is high desirable that a playback head not abrade against a recording tape while a separate record head effects high speed recording of the tape. Aside from causing the playback transducer gap to vanish gradually, high speed playback head-to-tape contact causes the radius of curvature of the tape contacting surface of the head to decrease as well, thereby further accelerating the consumption of the playback transducer gap. (By contrast, record heads have deep gaps and, as a result, are not as susceptible to gap-related problems. Besides, as is known, head efficiency in a record head increases with a decreasing gap depth).

Certainly, the straight-forward solution to the problem of playback head wear in a recorder employing high speed recording and low speed playback is to provide articulation of the playback head; i.e., to movably mount the playback head so that during high speed recording with a record head, the playback head is spaced from the tape, and thereby prevented from being worn out by the tape. During low speed playback, of course, the playback head is moved back into extremely close proximity with the tape, for playback purposes. To articulate the playback head requires fairly precise linkages since such linkages must set the playback head against the recorded tape track, or tracks, during playback. Precision parts mean added expense and, naturally, are to be avoided where possible.

It is well known that the loss L of signal (expressed in decibels) during playback of a recorded tape is approximately equal to 55 h/λ, where h is the unavoidable spacing between the playback head and the tape (due to the entrainment of air between the moving tape and the head), and λ is the wavelength of the recorded signal. Complementing this relationship is the fact that this head-to-tape separation h equals

$$0.643 \ R_o \left( \frac{6\mu u}{T} \right)^{2/3}$$

where
$R_o$=the radius of curvature of the tape contacting surface of the playback head

$\mu$=viscosity of air at room temperature (approximately $1.83 \times 10^{-4}$ dyne-seconds per square cm)

u=tape speed (cm/sec.)

T=tape tension (dynes/cm.).

Both of the above equations are discussed in a paper entitled "Experimental and Theoretical Investigation of Head to Tape Separation in Magnetic Recordings", IEEE Transactions on Magnetics, Vol. MAG-9, No. 4, December 1973, pages 683—688.

The invention is contained in claim 1.

According to the present invention, the above equations are used to advantage in providing, in a recorder of the type having differing record and playback speeds, an inarticulated wear-free playback head. According to the invention, the shape of the playback head at the tape/head interface is contoured to cause the tape to "fly" (i.e. be aerodynamically lifted) over the head's gapped surface when the tape is advanced at high speed (e.g. during the recording operation). Being spaced from the moving tape, the relatively shallow transducer gap of the playback cannot be abraded and worn out by the moving tape. When the tape is advanced at slow speed for playback, the playback head-to-tape spacing is desirably miniscule so that the signal loss due to such spacing is at a tolerable level. The invention and its advantages will be better understood from the ensuing detailed description of a preferred embodiment, reference being made to the drawings in which:

Fig. 1 is a diagram illustrating the logarithmic relationship that exists between spacing loss (L) and the corresponding signal attenuation,

Fig. 2 is a block diagram illustrating a recording apparatus having inarticulated record and playback heads, and which apparatus is depicted in its record mode of operation, and

Fig. 3 is a block diagram illustrating the recording apparatus of Fig. 2 in its playback mode of operation.

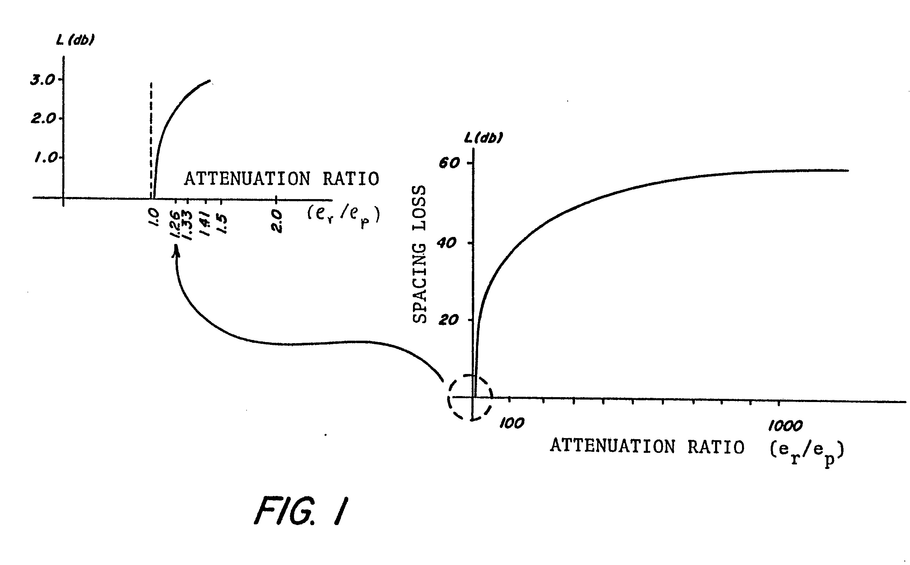

Referring to Fig. 1, a plot depicting the relationship between the spacing loss L (expressed in decibels, db), and the corresponding levels of attenuation of the playback signal shows the relationship to be logarithmic in nature. That is, since the number of decibels associated with an attenuation ratio of recorded and playback signals $e_R$ and $e_P$, respectively, equals

$$L = 20 \ \log_{10} \frac{e_R}{e_P}$$

a zero db spacing loss means an $e_R$ to $e_P$ attenuation ratio of 1; 20 db means an $e_R$ to $e_P$ attenuation ratio of 10; 40 db means an $e_R$ to $e_P$ attenuation ratio of 100; 60 db means an $e_R$ to

$e_P$ attenuation ratio of 1,000, and so on, with appropriate other $e_R$ to $e_P$ attenuation ratio values occurring between such specifically identified decibel levels. It is interesting to note (from the expanded portion of the Fig. 1 curve) that for decibel levels from below 3 (and especially from below 2.5) the attenuation ratio barely decreases from 1.5 (or 1.33) to one, whereas if the decibel level changes from, say, 60 to 57 the attenuation ratio changes significantly i.e. from 1,000 to about 317, a difference of almost 700. Such being the case, the concept of the invention is to fly the tape, so that, during playback thereof, the tape is so close to the playback head that the spacing loss in decibels is less than about 3 and, during high speed recording of such tape, the tape is so far away from the playback head that any abrasion between the playback head and the tape is eliminated or, at least, substantially reduced.

In light of the above statement concerning the concept of the invention, consideration should now be given to the spacing loss (L) equation cast in terms of the head-to-tape separation h, i.e.

$$h = \frac{L\lambda}{55}$$

Assuming a typical recorded wavelength of 2 microns the head-to-tape separation $h_P$ for a tolerable playback loss of, say, 2.5 decibels would be

$$h_P = \frac{2.5 \times 2}{55} = 0.091 \text{ microns,}$$

a situation where the tape is practically in contact with the playback head. Now, having identified a tolerable head-to-tape separation of about 0.09 microns for the example in question, the radius of curvature $R_o$ for the face of the playback head which will effect such head-to-tape separation, at a playback tape speed of, for example, 15 centimeters per second, and under a tape tension T of, for example, $8.8 \times 10^4$ dynes/centimeter, may be determined from the second of the two relationships discussed above. Thus,

$$R_o = \frac{L\lambda}{55 \times 0.643} \left(\frac{T}{6\mu u}\right)^{2/3}$$

$$R_o = \frac{2.5 \times 2 \times 10^{-4}}{55 \times 0.643} \left(\frac{8.8 \times 10^4}{6 \times 1.83 \times 10^{-4} \times 15}\right)^{2/3}$$

$$R_o = 0.43 \text{ centimeters}$$

With a head having a facial radius of curvature of 0.43 centimeters, it is interesting to determine the degree of tape flight that occurs when, without doing anything else, the tape speed is increased, as in high speed recording, to say 450 centimeters per second (cm/s). In such a case, the head-to-tape separation $h_R$ becomes

$$h_R = 0.643 \ R_o \left(\frac{6\mu \ u}{T}\right)^{2/3}$$

$$h_R = 0.643 \times 0.43 \left(\frac{6 \times 1.83 \times 100^{-4} \times 450}{8.8 \times 10^4}\right)^{2/3}$$

$$h_R = 0.79 \text{ microns,}$$

a separation which is approximately nine times the separation when the tape is moving at the slower speed. Thus, by the judicious selection of a radius of curvature for the face of a playback head, that head may provide efficient playback of recorded signals from a magnetic tape depending on whether the tape is run at less than a certain speed. When run at high recording speeds, however, the tape lifts itself above the playback head, thereby preventing (or, at least, substantially reducing) undesired playback head abrasion by the fast moving tape.

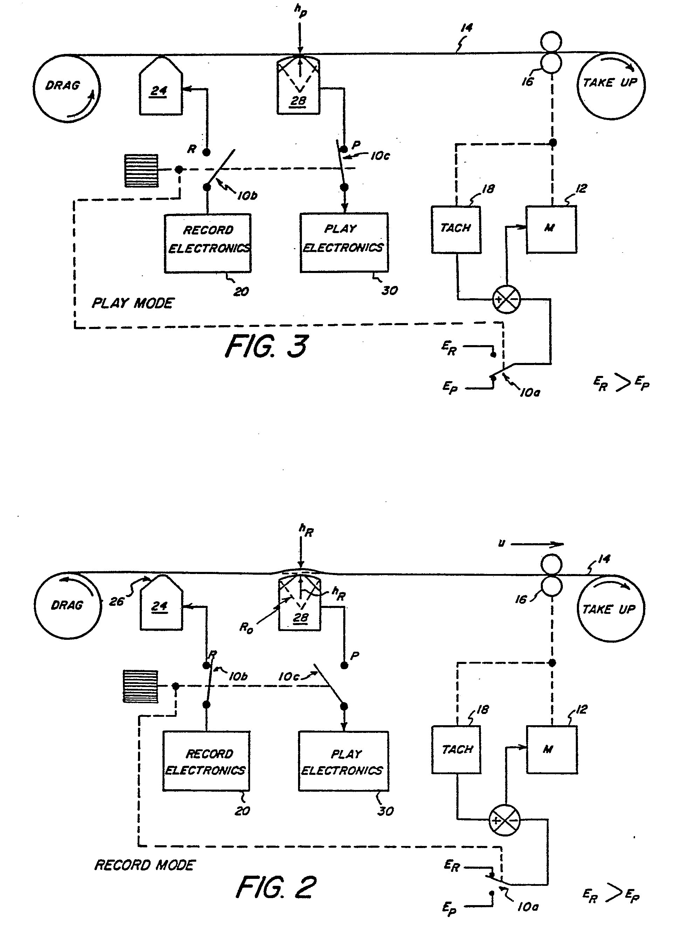

Turning now to Figs. 2, 3, a magnetic tape recorder of the type having high speed recording, and low speed playback, is shown. In the recording mode of Fig. 2, a switch 10a is set to apply a voltage $E_R$ to a capstan motor 12. The capstan motor 12 advances tape 14, via a capstan 16, at a first high speed (e.g. 450 cm/s) as determined by the voltage $E_R$. A tachometer 18, driven by the motor 12, produces a feedback signal for servoing the motor 12 to drive the tape precisely at the desired recording speed. As the tape 14 advances, signals supplied by record electronics 20 are applied via a switch 10b to a record head 24. The record head 24 is conventional, has a deep gap, and is, therefore, relatively immune to abrasion caused by the fast passage of tape over its surface 26.

The playback head 28, having a facial radius of curvature $R_o$, as determined above, is situated downstream of the record head 24 (but could, if preferred, be upstream of the record head 24); and, because of its facial radius of curvature, high speed passage of the tape 14 vis-a-vis the playback head 28 causes air to be entrained by the tape motion, whereby the tape lifts by a distance $h_R$ out of abrading-contact with the delicate playback head.

During playback (Fig. 3), a switch 10c is closed; the switch 10b is opened; and the switch 10a is set to apply a relatively low voltage $E_P$ to the capstan motor 12, the voltage $E_P$ being that voltage which will cause the motor 12 to drive the tape 14 at the desired playback speed of, for example 15 cm/s. As the tape 14 moves to slow speed, it barely separates from the surface of the playback head, the minimal head-to-tape separation of $h_P$

being virtually ineffectual to prevent good playback, via electronics 30, of recorded signals.

It will be appreciated, from the foregoing discussion, that the invention provides, in a magnetic tape recorder having high speed recording and low speed playback, that the playback head has facial contouring which will prevent the playback head from being in extremely close contact with the recording medium unless the medium-to-head speed is relatively small. It is preferred that (a) the playback head-to-tape separation during playback is about one-twentieth the shortest recorded wavelength; (b) the playback head-to-tape separation $h_R$ during the recording process is about one-half the shortest recorded wavelength; and (c) the ratio of

$$\frac{h_R}{h_P}$$

is about 10.

## Claims

1. A magnetic tape recorder comprising separate record and playback heads which are respectively mounted at fixed locations relative to a tape transport path, such heads being selectively operable for recording and playing back signals on a magnetic tape (14) moving along such path, and multispeed transport means (10a, 12, 18, 16) for advancing a magnetic tape along such path at a first relatively fast speed while the record head is operating to record signals on the tape, and at a second relatively slow speed while the playback head is operating to play back the signals recorded on the tape, characterized in that the tape-contacting surface of the playback head (28) is so contoured as to cause a relatively large volume of air to be entrained between the tape and said surface when the tape is advanced along said path at said first speed, whereby a substantial playback head-to-tape separation ($h_R$) is provided while signals are recorded on the tape, and to cause a lesser volume of air to be entrained between the tape and said surface when the tape is moving along said path at said second speed, whereby a substantially smaller playback head-to-tape separation ($h_P$) is provided to enable the signals recorded on the tape to be played back by said playback head.

2. The tape recorder as defined by claim 1 characterized in that said surface has a radius ($R_o$) of curvature such that the playback head-to-tape separation is, during signal playback, about 1/20 the shortest wavelength of the signal recorded on the tape and, during signal recording, said separation is about one half said wavelength.

3. The tape recorder as defined by claim 2 characterized in that said radius of curvature is approximately equal to

$$R_o = \frac{L\lambda}{55 \times 0.643} \left( \frac{T}{6\mu u} \right)^{2/3}$$

where

L is a number less than about 3,

$\lambda$ is the shortest recorded wavelength, in centimeters, to be played back,

T is the tension of said tape in dynes per centimeter,

u is said slower speed in centimeters per second, and

$\mu$ is the viscosity of air in dyne-seconds per square centimeter.

4. The tape recorder as defined by claim 3 characterized in that

(a) said first relatively fast tape speed is about 450 centimeters per second,

(b) said second relatively slow tape speed is about 15 centimeters per second,

(c) the tension in said tape, during said second relatively low playback speed is about 9 dynes per centimeter, and

(d) the radius ($R_o$) of curvature of the tape contacting face of said playback head is approximately 0.43 centimeters.

## Patentansprüche

1. Tonbandgerät mit getrennten Aufzeichungs- und Wiedergabeköpfen, von denen jeder in einer ortsfesten Position relative zu einer Bandtransporbahn angeordnet ist, wobei diese Köpfe selektiv für die Aufzeichung und Wiedergabe von Signalen auf einem sich längs dieser Bahn bewegenden Magnetband (14) betätigbar sind, und mit Mehrgeschwindigkeitstransportmitteln (10a, 12, 18, 16), mit denen ein Magnetband längs dieser Bahn mit einer ersten, relative hohen Geschwindigkeit vorwärtsbewegt wird, während der Aufzeichnungskopf Signale auf dem Band aufzeichnet, und mit einer zweiten, relative niedrigen Geschwindigkeit, während der Wiedergabekopf die auf dem Band aufgezeichneten Signale wiedergibt, dadurchgekennzeichnet, daß die mit dem Band in Berührung kommende Fläche des Wiedergabekopfes (28) eine solche Umrißform besitzt, daß dadurch zwischen dem Band und der Fläche eine relative große Luftmenge eingeschlossen wird, wenn das Band mit der ersten Geschwindigkeit längs der Bahn bewegt wird, so daß zwischen Wiedergabekopf und Band ein wesentlicher Abstand ($h_R$) vorliegt, während Signale auf dem Band aufgezeichnet werden, und daß zwischen dem Band und der Fläche eine geringere Luftmenge eingeschlossen wird, wenn sich das Band mit der zweiten Geschwindigkeit längs der Bahn bewegt, so daß zwischen Wiedergabekopf und Band ein wesentlich geringerer Abstand ($h_P$) vorliegt, wodurch eine Wiedergabe der auf dem Band aufgezeichneten Signale durch den Wiedergabekopf ermöglicht wird.

2. Tonbandgerät nach Anspruch 1, dadurch gekennzeichnet, daß die Fläche einen Krümmungsradius ($R_o$) aufweist, der so gewählt ist, daß der Abstand zwischen Wiedergabekopf und Band während der Signalwidergabe etwa 1/20 der kürzesten Wellenlänge des auf dem Band aufgezeichneten Signals und während der Signalaufzeichnung etwa der Hälfte dieser Wellenlänge entspricht.

3. Tonbandgerät nach Anspruch 2, dadurch gekennzeichnet, daß der Krümmungsradius annähernd

$$R_o = \frac{L\lambda}{55 \times 0.643}\left(\frac{T}{6\mu\, u}\right)^{2/3}$$

entspricht, worin bedeuten:

L eine Zahl von weniger als etwa 3

$\lambda$ die kürzeste wiederzugebende Wellenlänge in cm

T die Spannung des Bandes in Dyn/cm

u die niedrigere Geschwindigkeit in cm/Sek. und

$\mu$ die Viskosität der Luft in Dynsekunden/cm².

4. Tonbandgerät nach Anspruch 3, dadurch gekennzeichnet, daß

(a) die erste, relativ hohe Geschwindigkeit etwa 450 cm/Sek. beträgt,

(b) die zweite, relativ niedrige Geschwindigkeit etwa 15 cm/Sek. beträgt,

(c) die Spannung im Band während der zweiten, relative niedrigen Geschwindigkeit etwa 9 Dyn/cm entspricht und

(d) der Krümmungsradius ($R_o$) der das Band der berührenden Fläche des Wiedergabekopfes etwa 0.43 cm mißt.

**Revendications**

1. Enregistreur à bande magnétique comprenant des têtes d'enregistrement et de restitution distinctes qui sont montées respectivement dans des positions fixes relatives à la trajectoire de la bande et qui sont mises en oeuvre à volonté pour enregistrer et restituer des signaux d'une bande magnétique (14) se déplaçant suivant cette trajectoire, et des moyens d'entraînement à plusieurs vitesses (10a, 12, 18, 16) pour mouvoir une bande magnétique suivant cette trajectoire à une première vitesse relativement rapide alors que la tête d'enregistrement fonctionne pour enregistrer des signaux sur la bande, et à une seconde vitesse relativement lente alors que la tête de restitution fonctionne pour reproduire les signaux enregistrés sur la bande, cet enregistreur étant caractérisé en ce que la surfuce de la tête de restitution (28) au contact de la bande est profilée de manière à ce qu'un volume d'aire relativement important soit entraîné entre la bande et cette surface lorsque la bande défile suivant cette trajectoire à cette première vitesse afin de ménager un écart ($h_R$) bande-tête de restitution alors que des signaux sont enregistrés sur la bande, et de manière à ce qu'un volume d'air moindre soit entraîne entre la bande et cette surface lorsque la bande défile suivant cette trajectoire à cette seconde vitesse afin de ménager un écart ($h_P$) bande-tête de restitution bien moindre pour permettre une reproduction des signaux enregistrés sur la bande par cette tête de restitution.

2. Enregistreur à bande conforme à la revendication 1, caractérisé en ce que cette surface à un rayon de courbure ($R_o$) tel que l'écart bande-tête de restitution est, lors de la reproduction des signaux, d'environ 1/20 de la longueur d'onde la plus courte des signaux enregistrés sur la bande et, lors de l'enregistrement des signaux, cet écart est d'environ la moitié de la dite longueur d'onde.

3. Enregistreur à bande conforme à la revendication 2 caractérisé en ce que ce rayon de courbure est approximativement égal à

$$R_o = \frac{L\lambda}{55 \times 0{,}643}\left(\frac{T}{6\mu\, u}\right)^{2/3}$$

où

L est un nombre inférieur à 3 environ,

$\lambda$ est la plus courte longueur d'onde enregistrée, en centimètres, à restituer,

T est la tension de cette bande en dynes par centimètre

u est cette vitesse la plus lente en centimètre par seconde et

$\mu$ est la viscosité de l'air en dyne-seconde par centimètre carré.

4. Enregistreur à bande conforme à la revendication 3 caractérisé en ce que

(a) cette première vitesse de bande relativement rapide est d'environ 450 cm/s,

(b) cette seconde vitesse de bande relativement lente est d'environ 15 cm/s,

(c) la tension de cette bande, lors de son défilement à cette seconde vitesse relativement lente est d'environ 9 dyn/cm, et

(d) le rayon de courbure ($R_o$) de la surface de la tête de restitution au contact de la bande est approximativement de 4,3 mm.

FIG. 1

*FIG. 3*

$E_R > E_P$

*FIG. 2*

$E_R > E_P$